# EUROPEAN PATENT APPLICATION

(11) **EP 4 644 480 A1**
(43) Date of publication of application: **05.11.2025**
(21) Application number: 24173868.1
(22) Date of filing: 02.05.2024
(51) Int. Cl.: C08L 23/12

(54) **POLYPROPYLENE COMPOSITION AND AN ARTICLE THEREOF**

(71) Applicant: Basell Poliolefine Italia S.r.l., 20121 Milano (IT)
(72) Inventor: BURGIN, Emanuele, 44122 Ferrara (IT); PRINI, Giansiro, 44122 Ferrara (IT)
(74) Representative: LyondellBasell

(57) **Abstract**

The present application provides polypropylene composition comprising 60 to 90% of a heterophasic copolymer of polypropylene and 10 to 40% of a LDPE having density below 0.930 g/cm³. The disclosed polypropylene composition has exhibited higher melt strength and enhanced foaming performance, for suitable application in lightweight applications, heat and sound insulation, electromagnetic shielding, tissue engineering, oil spill cleanup, shape memory and flexible materials. The present application also provides a method for producing a molded foamed article and such an article thereof.

## Description

### FIELD OF THE INVENTION

The present disclosure generally relates to polypropylene composition. Specifically, the disclosure relates to polypropylene heterophasic composition incorporated with a polymer component, exhibiting high melt strength and enhanced foamability, and injection molded articles thereof.

### BACKGROUND OF THE INVENTION

It is widely known in the art that the processability of propylene homopolymers and copolymers in the molten state is largely influenced by their molecular weight, commonly expressed through melt flow rates (MFR), and their molecular weight distribution (MWD). The latter can be represented as the ratio of weight average molecular weight (Mw) to number average molecular weight (Mn) or as the Polydispersity Index (PDI).

Propylene polymers with a broader molecular weight distribution or higher Polydispersity Index exhibit lower melt viscosity compared to polymers with a narrower molecular weight distribution. Consequently, these polymers with broad MWD demonstrate enhanced flow properties in processes such as thermoforming, injection molding, blow molding, stretch blow molding, coating, and film conversion.

It is pertinent to understand that the interplay between molecular weight and molecular weight distribution, significantly influences the molten state characteristics of propylene polymers, impacting their suitability and performance in various industrial applications. Specifically, properties such as melt strength and foamability play a crucial role for various applications such as in lightweight materials, heat and sound insulation, electromagnetic shielding, tissue engineering, oil spill cleanup, shape memory, and flexible materials.

Particularly, for certain applications, such as polymer foams, products having different flowability in combination with high melt strength are more desirable. It is known in the art to produce said polymers by melt blending propylene polymer fractions having different molecular weight or to produce reactor-blends of said fractions in multi-step polymerization processes.

The European patent EP 573862 describes broad MWD propylene polymers having high MWD, MFR greater than 2 g/10 min and high melt strength, obtainable in two or more polymerization steps. The melt strength of the propylene polymers herein described increases as the MWD increases. However, for very high values of the MWD the mechanical properties of the polymers worsen and the polymers tend to be very brittle.

Generally, heterophasic polypropylene compositions, which consist of a crystalline fraction and an amorphous phase of propylene-ethylene, possess favorable mechanical properties. For example, application number EP 1899415 and PCT publication WO 2022/002514 discloses propylene polymers having broad molecular weight distribution and high melt strength. Further, application number EP1674530 discloses a thermoplastic elastomer composition, comprising at least one linear crystalline polyolefin and at least one thermoplastic elastomer. However, their foamability is still restricted due to the inherent low melt strength of the linear polymer.

Consequently, there is a need for polypropylene composition which possess favourable mechanical properties including both high melt strength and enhanced foamability, to be used particularly in foaming applications. In view of the foregoing, the inventors of the present disclosure have significantly advanced the state of the art in the field of polypropylene composition, by offering enhanced foamability performance of the polypropylene composition.

To this end, an object of the present invention is to provide a heterophasic polypropylene composition incorporating a polymeric component such as recycled low-density polyethylene (LDPE) into the polymer matrix. LDPE, sourced from recycled materials, has surprisingly been proven by the inventors to be a valuable additive in overcoming the limitations associated with low melt strength in polypropylene compositions.

Another object of the present invention is to provide a process for producing a molded article and an article thereof. The incorporation of recycled LDPE into the composition has been found by the inventors to significantly improve foamability, unlocking new possibilities for polypropylene applications. The disclosure accordingly specifies key composition criteria for optimal results.

By adhering to the polypropylene composition specifications, the invention aims to revolutionize the foamability of PP, especially in heterophasic compositions, paving the way for improved mechanical properties and expanded applications in fields such as insulation and lightweight materials. The present application represents a significant advancement in the realm of polymer technology, offering a sustainable solution by incorporating recycled materials to enhance the performance of polypropylene compositions.

### BRIEF SUMMARY OF THE INVENTION

The present invention addresses the limitations of existing polymer technology by providing polypropylene heterophasic composition.

In one aspect the present disclosure, a polypropylene composition is provided. The composition comprises 60 to 90% of a heterophasic copolymer of polypropylene as component A, including a polymer fraction (a) and a polymer fraction (b). The polymer fraction (a) is present in an amount that ranges from 15 to 85% by weight with respect of the total amount of component A and is comprised of a propylene polymer, selected from a homopolymer or copolymer, wherein said copolymer includes up to 15.0% by weight of units derived from a comonomer selected from ethylene or certain alpha-olefins. The polymer fraction (b) is present in an amount that ranges from 15 to 85% by weight with respect of the total amount of component A and is comprised of a copolymer of ethylene with a comonomer selected from propylene or certain alpha-olefins, wherein the copolymer comprises 30 to 65% by weight of units derived from ethylene. Further, the polypropylene composition comprises 10 to 40% of a recycled LDPE as component B, having density below 0.930 g/cm³.

In another aspect of the present disclosure, an article comprising a polypropylene compositions; and specifically a foamed article thereof is disclosed.

In yet another aspect, a process for producing injection molded articles is disclosed. The foregoing has outlined rather broadly the features and technical advantages of the present invention in order that the detailed description of the invention that follows may be better understood. Additional features and advantages of the invention will be described hereinafter, which form the subject matter of the claims of the invention. It should be appreciated by those skilled in the art that the conception and specific embodiments disclosed may be readily utilized as a basis for modifying or designing molded containers or articles (injection, compression, or blow molded; thermoformed; or extruded), and/or processes for carrying out the same purposes of the present invention. It should also be realized by those skilled in the art that such equivalent constructions do not depart from the spirit and scope of the invention as set forth in the appended claims. The novel features which are believed to be characteristic of the invention, both as to its structure and method of manufacture, together with further objects and advantages will be better understood from the following description.

### DETAILED DESCRIPTION OF THE INVENTION

Illustrative embodiments of the subject matter claimed below will now be disclosed. In the interest of clarity, some features of some actual implementations may not be described in this specification. It will be appreciated that in the development of any such actual embodiments, numerous implementation-specific decisions must be made to achieve the developer's specific goals, such as compliance with system-related and business-related constraints, which will vary from one implementation to another. Moreover, it will be appreciated that such a development effort, even if complex and time-consuming, would be a routine undertaking for those of ordinary skill in the art having the benefit of this disclosure.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than the broadest meaning understood by skilled artisans, such a special or clarifying definition will be expressly set forth in the specification in a definitional manner that provides the special or clarifying definition for the term or phrase. It must also be noted that, as used in the specification and the appended claims, the singular forms "a," "an," and "the" include plural references unless otherwise specified.

For example, the following discussion contains a non-exhaustive list of definitions of several specific terms used in this disclosure (other terms may be defined or clarified in a definitional manner elsewhere herein). These definitions are intended to clarify the meanings of the terms used herein. It is believed that the terms are used in a manner consistent with their ordinary meaning, but the definitions are nonetheless specified here for clarity.

As used in this specification and the claims, the terms "comprising," "containing," or "including" mean that at least the named compound, element, material, particle, or method step is present in the composition, the article, or the method, but does not exclude the presence of other compounds, elements, materials, particles, or method steps even if the other such compounds, elements, materials, particles, or method steps have the same function as that which is named, unless expressly excluded in the claims. It is also to be understood that the mention of one or more method steps does not preclude the presence of additional method steps before or after the combined recited steps or intervening method steps between those steps expressly identified.

Moreover, it is also to be understood that the lettering of process steps or ingredients is for identifying discrete activities or ingredients and the recited lettering can be arranged in any sequence, unless expressly indicated.

For the purpose of the present description and of the claims which follow, except where otherwise indicated, numbers expressing amounts, quantities, percentages, and so forth, are to be understood as being modified by the term "about". Also, ranges include any combination of the maximum and minimum points disclosed and include any intermediate ranges therein, which may or may not be specifically enumerated herein.

Wherever possible, the same reference numbers will be used throughout the drawings to refer to the same or the like parts. Embodiments disclosed herein are related to a polypropylene composition, a process for producing an injected molded article and particularly foamed article for application in foaming products, comprising the said polypropylene composition, according to the teachings of the present disclosure.

As used herein the term "copolymer" has to be intended as a polymer containing only two kind of monomers such as propylene and ethylene or propylene and 1 -hexene.

As used herein the phrase "comonomer" or "monomer" can be used interchangeably, refers to molecule that undergoes polymerization along with another type of monomer to form a copolymer.

As used herein the phrase "alpha-olefins", refers to a class of alkenes where the double bond is located at the first carbon atom from the terminal end of the carbon chain. Specifically, any compound with a polymerizable moiety that is added to a reactor in order to produce a polymer. In those instances in which a polymer is described as comprising one or more monomers, e.g., a polymer comprising propylene and ethylene, the polymer, of course, comprises units derived from the monomers, e.g., -CH₂-CH₂-, and not the monomer itself, e.g., CH₂=CH₂.

"LDPE," as used herein, means ethylene homopolymers and/or ethylene copolymers produced in a high pressure free radical polymerization and having a density in the range of 0.910 g/cm³ to 0.940 g/cm³.

As used herein the phrase "Recycled Polymers" or "Recycled LDPE" can be used interchangeably, refers to materials sourced from products that have been previously used. These materials originate from industrial waste, with materials specifically derived from end-user waste that has undergone collection and recycling.

As used herein the phrase "molecular weight distribution" or "distribution of molecular weight (Mw/Mn)" can be used interchangeably, refers to range of molecular weights present in a polymer sample and their respective abundance or distribution. It is generally represented graphically as a curve, where the x-axis represents the molecular weight and the y-axis represents the relative abundance or concentration of polymer chains with a particular molecular weight. In the present disclosure, molecular weight distribution significantly influences the physical, mechanical, and processing properties of polymers, such as strength, flexibility, viscosity, and melt flow behavior.

As used herein the phrase "melt flow index" or "melt flow rate (MFR)" can be used interchangeably, refers to the ability of a polymer during polymer processing, to flow or deform under an applied force when it is in a molten or semi-molten state.

As used herein the term "foamability" or "foaming performance" of a polymer, refers to its capability to form a stable foam when the polymer is subjected to a foaming process. Foaming involves introducing gas bubbles into a polymer matrix, resulting in a cellular structure with voids or pores dispersed throughout the polymer material. This cellular structure gives foamed polymers unique properties such as reduced density, improved insulation, and increased impact absorption.

The present disclosure provides a polypropylene composition. The polypropylene composition in accordance with the present disclosure is characterized by its varied blend of polymer fractions and polymer components, providing enhanced properties suitable for a wide range of applications. Beneficially, the polypropylene composition as per the present disclosure has improved foamability for various applications. Further beneficially, the enhanced mechanical properties lead to expanded utility in areas like insulation and lightweight materials. Furthermore beneficially, the polypropylene composition of the present disclosure is endowed with high melt strength and enhanced foamability, therefore the polypropylene composition is readily processable and have good flow properties in the molten state while retaining good mechanical properties, in particular high rigidity, high stress at yield high creep resistance and high heat distortion resistance.

In accordance with the present disclosure the polypropylene composition comprises component A and component B. The component A comprises, 60% to 90% of a heterophasic copolymer of polypropylene, incorporating two distinct polymer fractions denoted as polymer fraction (a) and polymer fraction (b). Further, the polypropylene composition comprises 10 to 40% of a recycled LDPE as component B, to enhance the overall performance of the polymer in applications requiring improved melt strength and foamability.

The composition of the present disclosure is preferably endowed with a very broad molecular distribution of molecular weight Mw/Mn. The broad molecular distribution of molecular weight, enables the processability of the polypropylene composition of the present disclosure which is considerably improved. In an embodiment the polymer fraction (a) constitutes 15% to 85% by weight of the component A and comprises a propylene polymer. The propylene polymer in accordance with the present disclosure may be a homopolymer or a copolymer containing up to 15.0% by weight of units derived from comonomers such as ethylene or certain alpha-olefins. Further, the polymer fraction (b) constitutes 15 to 85% by weight of component A and is comprised of a copolymer of ethylene with a comonomer selected from propylene or certain alpha-olefins, the copolymer comprises 30 to 65% by weight of units derived from ethylene.

In accordance with the present disclosure, the amount of polymer fraction (a) ranges from 15 wt% to 85 wt%, preferably 60 wt% to 85 wt%, more preferably 65 wt% to 80 wt% of the heterophasic composition A, and said fraction (a) is preferably made of a propylene copolymer containing from 0.1 wt% to 10 wt%, preferably 0.3 wt% to 7 wt%, more preferably from 0.5 wt% to 3.5 wt%, of units derived from a comonomer selected from ethylene, a CH₂=CHR alpha-olefin, where R is a linear or branched C2-C8 alkyl group, and combinations thereof. In a specific embodiment, the polymer fraction (a) is a propylene/1-hexene copolymer further characterized by one or more of the following:
- fraction soluble in xylene at 25°C comprised between 2.5 wt% and 10.0 wt%; preferably comprised between 3.1 wt% and 6.8 wt%; more preferably comprised between 3.8 wt% and 5.9 wt%. This solubility range is indicative of the molecular structure and composition of the propylene polymer, influencing properties such as crystallinity and thermal behaviour.
- melt flow rate (MFR L according to ISO 1133, condition L, i.e. 230°C and 2.16 kg load) ranging from 2.0 to 15.0 g/10 min; preferably ranging from 3.0 to 10.0 g/10 min; and
- polydispersity index (PI) comprised between 9.2 and 21.3; preferably comprised between 10.1 and 16.4; more preferably comprised between 11.3 and 14.2.

In accordance with the present disclosure, the amount of polymer fraction (b) ranges from 15 wt% to 85 wt%, preferably from 15 wt% to 40 wt%, more preferably from 20 wt% to 35 wt%, of the heterophasic composition A ans said fraction (b) is preferably made of a copolymer of propylene and ethylene containing from 30 wt% to 65 wt%, preferably from 45 wt% to 65wt%, more preferably from 45wt% to 60 wt%, of ethylene derived units. The polymer fraction (b) preferably comprises a copolymer of ethylene with a comonomer selected from propylene or certain alpha-olefins, like a CH₂=CHR alpha-olefin, where R is a linear or branched C2-C8 alkyl group, and combinations thereof. This copolymer demonstrates a solubility in xylene at 25°C. equal to or greater than 50% by weight. Preferably ranging between 60% to 100% by weight. This solubility range reflects the different molecular structure and composition of the ethylene copolymer, contributing to properties such as flexibility and impact resistance.

The polypropylene composition in an embodiment further comprises, 10 to 40%, preferably from 15 wt% to 35 wt%, more preferably from 20 wt% to 35 wt%, of a polymeric component as the component B. The component B is recycled low density polyethylene (LDPE). The recycled LDPE is produced in a high pressure free radical polymerization and having a density in the range of 0.910 g/cm³ to 0.940 g/cm³. Preferably the recycled LDPE having a density of below 0.930 g/cm³.

The polymeric component B in accordance with the present disclosure is added to the heterophasic copolymer of polypropylene (component A), to enhance the foamability performance. The incorporation of 10 to 40% of recycled LDPE acts as foaming agent in the polypropylene matrix, promoting the formation of bubbles during foaming processes. The inventors of the present application have surprisingly realized that the branched structure and lower melting point of recycled LDPE make it effective at initiating bubble formation, which thereby enhanced the foamability of the polymer blend.

In a most preferred embodiment, the polypropylene composition is foamed by using a single screw extruder that includes a two-stage shearing section that includes spaced blisters, and a homogenizing section between the blisters, and a homogenizing section downstream of the blisters. By using this extruder, the recycled LDPE has been used to produce technologically useful foamed sheets and foam profiles. This extruder and the method for its use are disclosed in US 5567370 , which is incorporated herein by reference.

The polypropylene composition in accordance with the present disclosure may also comprise blowing agents selected from the group comprising water, hydrocarbons such as pentane, propane and butane, fluorocarbons, hydrofluorocarbons, chlorofluorocarbons, hydrochlorofluorocarbons, nitrogen, and fluids such as carbon dioxide. Preferably the blowing agent is nitrogen which decompose or vaporize at elevated temperatures, generating gas bubbles within the polymer blend. The incorporation of the recycled LDPE in a further embodiment has also surprisingly improved the compatibility of the blowing agents with the polymer matrix, leading to more uniform bubble formation and distribution. This enhanced compatibility has resulted in a further finer and more stable foam structure as per the present disclosure.

Further beneficially, the inventors of the present disclosure have realized that the recycled LDPE incorporated has also altered the rheological properties of the polymer blend, thereby affecting its melt viscosity, elasticity, and flow behavior during processing. These changes have greatly influenced bubble nucleation, growth, and stabilization during foaming, ultimately leading to enhanced foamability.

In every embodiment of the present disclosure, the polypropylene composition comprising a combination of component A and component B has allowed for a balanced polymer blend with enhanced properties compared to conventional polypropylene compositions. The polypropylene composition in accordance with the present disclosure has not only exhibited improved stiffness, impact resistance, and processability, making it suitable for a wide range of applications including but not limited to packaging materials, automotive components, and specifically for foaming applications.

In a further embodiment the polypropylene composition may also comprise additives such as stabilizers, antioxidants, nucleating agents, fillers, reinforcements, or pigments to further enhance specific properties or achieve desired characteristics, without deviating from the spirit and scope of the present application.

The heterophasic propylene copolymer used as component A of the present disclosure is produced by sequential polymerization in at least two stages, with each subsequent polymerization stage being conducted in the presence of the polymeric material formed in the immediately preceding polymerization reaction, wherein the polymer fraction (a) is normally prepared in at least one first polymerization stage and the polymer fraction (b) is normally prepared in at least one second polymerization stage.

The polymer fraction (a) in accordance with the present disclosure is preferably generated through a polymerization process conducted across at least two interconnected polymerization zones, as outlined in European patent EP 782587 and International patent application WO00/02929. This process involves feeding propylene and ethylene or propylene and alpha-olefins into a first and second interconnected polymerization zone, where a catalyst system is present, and discharging the produced polymer. Initially, polymer particles undergo fast fluidization within the first zone (riser), then transition into the second zone (downcomer) in a densified state due to gravity. They subsequently return to the first zone, establishing a continuous polymer circulation between the two zones. Fast fluidization conditions in the first zone are achieved by introducing the monomer gas mixture below the point of polymer reintroduction, with gas velocity typically ranging from 2 to 15 m/s. In the densified flow of the second zone, pressure increases, facilitating polymer reintroduction into the first zone without mechanical aid. This creates a "loop" circulation governed by pressure balance and head loss. Optionally, inert gases like nitrogen or aliphatic hydrocarbons can be present in the zones, comprising 5 to 80% of the total gas pressure. Operating parameters such as temperature (50°C to 120°C, preferably 70°C to 90°C) and pressure (0.5 to 10 MPa, preferably 1.5 to 6 MPa) align with typical gas-phase olefin polymerization processes. Preferably, catalyst components are introduced into the first zone, but they may also be added to the second zone.

The polymerization process includes measures to prevent the gas and/or liquid mixture in the riser from entering the downcomer entirely or partially. Additionally, a gas and/or liquid mixture with a different composition from that in the riser is introduced into the downcomer. In a preferred setup, introducing this distinct mixture into the downcomer via one or more lines effectively stops the riser mixture from entering the downcomer. The alternate composition mixture can optionally be introduced in partially or fully liquefied form. By conducting the polymerization process in a reactor illustrated in International Patent Application WO00/02929 and independently controlling the comonomer(s) and common molecular weight regulators, especially hydrogen, in varying proportions into at least one polymerization zone, preferably the riser, the molecular weight distribution and thus the PDI (polydispersity index) value of the growing polymers can be tailored conveniently.

The polymer fraction (b) in accordance with the present disclosure is preferably manufactured in a conventional fluidized-bed gas-phase reactor, where the polymeric material and the catalyst system from the preceding polymerization step are present.

Every polymerization stage utilizes a highly stereospecific heterogeneous Ziegler-Natta catalyst. The Ziegler-Natta catalysts employed in producing the propylene polymer compositions in an embodiment include a solid catalyst component containing at least one titanium compound with at least one titanium-halogen bond and an electron-donor compound (internal donor), both supported on magnesium chloride. Additionally, these catalyst systems feature an organo-aluminum compound as an essential co-catalyst and optionally an external electron-donor compound. Suitable catalyst systems are described in the European patents EP45977, EP361494, EP728769, EP 1272533 and in the international patent application WO00163261.

The polypropylene composition comprising component A of the present disclosure is preferably obtainable by polymerizing propylene and ethylene in various stages in the presence of a catalyst system comprising the product obtained by contacting the following components: a) a solid catalyst component comprising a magnesium halide, a titanium compound having at least a Ti-halogen bond and at least one electron donor compound selected from succinates, b) an aluminum hydrocarbyl compound, and c) optionally an external electron donor compound, as described in EP4172264A1 incorporated as a reference herein.

The polymeric component B in accordance with the present disclosure is manufactured according to the conventional methods known in the state of art. The process in general involves, collecting waste LDPE materials from various sources such as household recycling bins, commercial establishments, or industrial facilities. These collected materials are then sorted based on their polymer type to separate LDPE from other plastics. The sorted LDPE materials undergo a washing and cleaning process to remove any contaminants such as dirt, debris, labels, or residual contents. This step is crucial to ensure the quality and purity of the recycled LDPE.

Further, the cleaned LDPE materials are shredded or ground into smaller pieces or pellets. This increases the surface area and facilitates the subsequent melting and extrusion processes. The shredded LDPE is melted and extruded through a die to form pellets or granules. During this process, any remaining impurities are filtered out, and additives such as stabilizers or colorants may be incorporated as needed. The molten LDPE is then formed into pellets or granules of uniform size and shape. These pellets can then be used as raw material in various manufacturing processes to produce recycled polymer compositions, such as blends with other polymers or as additives to enhance properties in new polymer products. In the present disclosure 10 to 40% by weight of recycled LDPE is used a component B.

Components A and B can be mixed together is several ways in order to prepare the polypropylene composition of the present disclosure. Preferably, the component A and component B are brought together by melt blending. The two polymer components are ground into pellets to increase their surface area and facilitate melting. The polymer pellets are then fed into an extruder, which applies heat and pressure to melt them. The extruder consists of a barrel with a screw mechanism inside. As the pellets move through the barrel, they are heated to their melting point and become viscous molten polymer. Within the extruder, the molten polymers are mixed together thoroughly by the rotating screw mechanism. This ensures homogeneity of the blend and distribution of the components. After mixing, the molten polymer blend is extruded through a die to give it the desired shape. The extruded material cools, it solidifies and retains the blended properties.

In every embodiment of the present disclosure the propylene homo- or copolymers are characterized by a very broad molecular weight distribution as indicated by the high values of polydispersity index (PDI). Preferably, the PDI value ranges from 15 to 50, more preferably from 20 to 45, particularly preferably from 20 to 35. The processability of the polypropylene homo- or copolymers of the present disclosure is considerably improved with respect to conventional propylene homo- or copolymers. In a specific embodiment the distribution of molecular weight Mw/Mn for polymer fraction (a) ranges from 10 to 90. In a preferred embodiment, the distribution of molecular weight Mw/Mn for polymer fraction (a) ranges from 15to 80

The polypropylene composition in accordance with the present disclosure is characterized in having:
- a xylene soluble fraction at 25°C ranging from 10 to 25 % by weight;
- intrinsic viscosity of the fraction soluble in xylene at 25°C ranges from 4 dl/g to 6.5 dl/g;
- flexural modulus (ISO178) from 900 to 1020 MPa;
- Izod Impact value at 23°C (ISO 180/1A) from 10 to less than 60 kJ/m²; and
- a melt flow rate (ISO1133, 230°C/2.16 Kg) ranging from 0.2 to 10 g/10 min.

The melt strength value is a measure of the applied linear force needed to break the polymer melt. The melt strength, measured at 230°C, of the very broad molecular weight distribution polypropylene homo- or copolymers of the present disclosure is higher than 1.50 cN, preferably the melt strength value ranges from 2.00 to 30.00 cN, more preferably from 5.00 to 25.00 cN, particularly preferably from 5.0 to 20.00 cN.

The melt flow rate (measured according to ISO1133, 230°C/2.16 Kg) of the very broad molecular weight distribution polypropylene homo-or copolymers of the disclosure ranges from 0.2 to 10 g/10 min, preferably from 0.3 to 8 g/10 min, particularly preferably from 0.5 to less than 6 g/10 min.

The polypropylene compositions comprising the propylene polymers and recycled LDPE of the present disclosure as matrix phase are particularly suitable for manufacturing foamed articles. In every embodiment of the present disclosure surprisingly, the addition of recycled LDPE to a heterophasic copolymer of polypropylene enhanced the foamability through improved compatibilization, nucleation, and modification of rheological properties. These factors have significantly contributed to the formation of a more uniform, stable, and fine foam structure with desirable mechanical and thermal properties for application in foamed sheets.

The present application also discloses an article comprising the polypropylene composition. In a specific embodiment the article is a foamed article selected form the group comprising foam sheets, laminated and un-laminated sheet, beads, foamed elastomeric, and profiles. In a preferred embodiment the article is foam sheets.

The present application further discloses a process for producing injection molded articles comprising the use of the polypropylene composition. The polypropylene composition as per the present disclosure can be processed into foamed products using conventional techniques known in the state of art. For ex., the polypropylene composition involves blending the component A and component B in suitable proportions using conventional compounding techniques such as melt blending, extrusion, or injection molding. The resulting composition can be further processed into various shapes and forms depending on the intended application

Specifically the foamed products can be extruded using standard single or twin screw extruders, whether in single-layer or multi-layer configurations. Alternatively, the polypropylene composition as per the present disclosure may be initially pelletized, then foamed, and followed by molding to produce foamed polypropylene articles such as sheets, utilizing well-established methods in the field. Various foamed articles such as coated or uncoated pipes and packaging for food can also be produced using this polypropylene blend.

In accordance with the present disclosure, the synergistic combination of polymer fractions (a) and (b) with the polymer component B has imparted superior mechanical, thermal, and processing properties to the polypropylene composition. The combination of heterophasic copolymers and LDPE is able to give both, enhanced melt strength and foamability. These properties make it highly versatile and suitable for various applications including but not limited to packaging, automotive parts, construction materials, and consumer goods. The specific advantages in most preferred embodiments of the present disclosure include improved melt strength, foamability in addition to improved stiffness, impact resistance, heat resistance, and processability compared to conventional polypropylene composition with low melt strength and foamability.

For the sake of brevity, only certain ranges are explicitly disclosed herein. However, in addition to recited ranges, any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

All documents and references cited herein, including testing procedures, publications, patents, journal articles, etc., are herein fully incorporated by reference for all jurisdictions in which such incorporation is permitted and to the extent such disclosure is consistent with the description of the present invention.
Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the processes, machines, means, methods, and/or steps described in the specification. As one of the ordinary skill in the art will readily appreciate from the disclosure of the present invention, processes, machines, means, methods, and/or steps, presently existing or later to be developed that perform substantially the same function or achieve substantially the same result as the corresponding embodiments described herein, may be utilized according to the present invention. Accordingly, the appended claims are intended to include within their scope such processes, machines, means, methods, and/or steps.

## Claims

1. A polypropylene composition comprising:
A) 60 to 90% of a heterophasic copolymer of polypropylene, including a polymer fraction (a) and a polymer fraction (b);
the polymer fraction (a) being present in an amount ranging from 15 to 85% by weight with respect to total weight of component A and being made of a propylene polymer, selected from a homopolymer or copolymer, wherein said copolymer includes up to 15.0% by weight of units derived from a comonomer selected from ethylene or certain alpha-olefins,
the polymer fraction (b) being present in an amount ranging from 15 to 85% by weight with respect to total weight of component A and being made of a copolymer of ethylene with a comonomer selected from propylene or certain alpha-olefins, wherein the copolymer comprises 30 to 65% by weight of units derived from ethylene, and
B) 10 to 40% of a LDPE having density below 0.930 g/cm³.

2. The polypropylene composition according to claim 1, having a xylene soluble fraction at 25°C ranging from 10 to 25 % by weight.

3. The polypropylene composition of claim 2 wherein the intrinsic viscosity of the fraction soluble in xylene at 25°C ranges from 4 dl/g to 6.5 dl/g.

4. The polypropylene composition according to any of the preceding claims wherein the distribution of molecular weight Mw/Mn for polymer fraction (a) ranges from 10 to 90.

5. The polypropylene composition according to any of the preceding claims having a melt flow rate (ISO1133, 230°C/2.16 Kg) ranging from 0.2 to 10 g/10 min.

6. The propylene composition according to claim 1, wherein the polymer fraction (a) ranges from 60 to 85% by weight and polymer fraction (b) ranges from 15 to 40% by weight.

7. The propylene composition according to claim 1, wherein the polymer fraction (a) comprising propylene polymer is selected from propylene 1-hexene copolymer containing 0.5 to 3.5% by weight of 1-hexene derived units.

8. The propylene composition according to claim 1, wherein the polymer fraction (a) comprising propylene polymer is selected from a copolymer of ethylene and propylene containing 45.0 to 65.0% by weight of ethylene derived units.

9. The propylene composition according to claim 1, wherein the composition has flexural modulus (ISO 178) from 900 to 1020 MPa.

10. The propylene composition according to claim 1, wherein the composition has Izod Impact value at 23°C (ISO 180/1A) of less than 60 kJ/m².

11. An article comprising the polypropylene compositions according to any of the preceding claims.

12. A foamed article according to claim 11.

13. The foamed article according to claim 12 is selected from the group comprising foam sheets, laminated and un-laminated sheet, beads, and profiles.

14. A process for producing injection molded articles comprising the use of the polypropylene composition according to claims 1 to 10.
